# EUROPÄISCHE PATENTANMELDUNG

(11) **EP 0 995 912 A1**
(43) Veröffentlichungstag der Anmeldung: **26.04.2000**
(21) Anmeldenummer: 99120574.1
(22) Anmeldetag: 16.10.1999
(51) Int. Cl.: F16B 13/06

(54) **Verfahren und Bolzenanker zur Abstandsmontage**

(30) Priorität: 20.10.1998 DE 19848176
(71) Anmelder: Adolf Würth GmbH & Co. KG, 74653 Künzelsau (DE)
(72) Erfinder:
(74) Vertreter: Patentanwälte Ruff, Beier, Schöndorf und Mütschele

(57) **Zusammenfassung**

Ein Bolzenanker wird vorgeschlagen, der einen aus einer Ankerhülse (4) nach vorne bzw. außen herausragenden Ankerbolzen (1) mit einem Gewindeschaft aufweist. Der Gewindeschaft ist im vorderen Bereich von einer Abstandshülse (7) umgeben, die an dem Gewindeschaft durch Reibschluß festgelegt ist, beispielsweise mit Hilfe eines aus Gummi bestehenden Ringes (6). Das Ganze wird durch eine Unterlegscheibe (9) und eine Mutter (10) gesichert. Der Bolzenanker läßt sich in ein Bohrloch soweit einschlagen, bis das Abstandselement (7) das weitere Einschlagen verhindert. Nach Abnehmen der Mutter (10) kann ein Bauteil (11) auf den Schaft aufgeschoben und mit der Mutter (10) festgelegt werden. Erst dann erfolgt ein Verkeilen des Bolzenankers.

## Beschreibung

Es gibt eine Vielzahl von Dübeln und Bolzenankern, mit denen Bauteile, beispielsweise Fenster- oder Türrahmen, mit Abstand befestigt werden können. Hierbei ist es üblich, das zu befestigende Bauteil zunächst vorübergehend anzuordnen und dann die Befestigung durchzuführen.

Der Erfindung liegt die Aufgabe zugrunde, eine einfach durchzuführende Möglichkeit zur Befestigung eines Bauteils mit Abstand vor einem anderen Bauteil, beispielsweise einer Wand, zu schaffen.

Zur Lösung dieser Aufgabe schlägt die Erfindung einen Bolzenanker mit den Merkmalen des Anspruchs 1 vor. Weiterbildungen der Erfindung sind Gegenstand der abhängigen Ansprüche, deren Wortlaut ebenso wie der Wortlaut der Zuammenfassung durch Bezugnahme zum Inhalt der Beschreibung gemacht wird.

Die Erfindung macht es möglich, beispielsweise einen bereits vorhandenen ggf. bauaufsichtlich zugelassenen Bolzenanker einfach durch ein Abstandselement zu ergänzen, mit dessen Hilfe die Abstandsbefestigung erfolgen kann.

In Weiterbildung der Erfindung kann vorgesehen sein, dass das Abstandselement an dem Ankerbolzen und/oder der Ankerhülse festgelegt wird, beispielsweise durch einen Reibschluss zwischen dem Abstandselement und dem Gewinde des Ankerbolzens. Der Reibschluss sorgt dafür, dass beim Aufspreizen der Ankerhülse, bei dem der Ankerbolzen axial bewegt wird, das Abstandselement seine Position zwischen der Oberfläche der Wand und dem zu befestigenden Gegenstand beibehalten kann.

In Weiterbildung der Erfindung kann das Abstandselement beispielsweise eine Abstandshülse aufweisen, die den Ankerbolzen mit Abstand umgibt.

Es kann erfindungsgemäß vorgesehen sein, dass die Festlegung des Abstandselements an dem Ankerbolzen durch mindestens ein Federelement erfolgt. Das Federelement kann an dem Ankerbolzen oder dem Abstandselement befestigt sein und an dem jeweils anderen Element federnd angreifen. Es kann aber auch so ausgebildet sein, dass es als eigenes Element vorhanden ist und sich an beiden Teilen federnd abstützt.

Insbesondere kann vorgesehen sein, dass zwischen dem Abstandselement und dem Ankerbolzen ein Ring aus einem gummielastisch verformbaren Material angeordnet wird, wobei dieser Ring die Federwirkung und damit die Festlegung herstellen kann. Da die Festlegung in erster Linie vor und während der Herstellung der Befestigung erforderlich ist, kann ein einfaches Element ausreichen, da es nach vollständig hergestellter Befestigung keine weitere Funktion mehr hat.

Der Ring aus elastisch verformbaren Material kann an einem der beiden Elemente direkt festgelegt sein, beispielsweise festgeklebt oder vulkanisiert. Es ist aber ebenfalls möglich und liegt im Rahmen der Erfindung, dass der Ring an dem Abstandselement und/oder dem Ankerbolzen durch seine eigene Verformung festgeklemmt wird. Dies kann durch eine entsprechende Dimensionierung des Rings erreicht werden.

Die Erfindung schlägt ebenfalls ein Verfahren mit den im Anspruch 7 genannten Merkmalen vor. Auch hier sind Weiterbildungen Gegenstand von abhängigen Ansprüchen.

Das Verfahren hat den Vorteil, dass ein zugelassener vorhandener Bolzenanker verwendet wird, der ggf. einen Ankerbolzen mit einem längeren Gewindeschaft enthält. Beim Einschlagen des Bolzenankers in das vorher hergestellte Loch wird dieser soweit fixiert, dass er in dem Loch bleibt. In Weiterbildung der Erfindung kann das Abstandselement dazu verwendet werden, die korrekte Sitztiefe des Bolzenankers in dem Loch zu bestimmen. Dies geschieht dadurch, dass der Bolzenanker eingeschlagen wird, bis das Abstandselement ein weiteres Einschlagen verhindert. In diesem Zustand liegt das Abstandselement zwischen der Oberfläche der Wand und der Unterseite der Mutter.

Erfindungsgemäß kann vorgesehen sein, zwischen das Abstützelement und die Mutter eine Unterlegscheibe einzusetzen, insbesondere dann, wenn es sich bei dem Abstandselement um eine Hülse handelt, die einen deutlich größeren Durchmesser aufweist als der Schaft des Ankerbolzens.

Nach dem Einschlagen des Ankerbolzens bis in die richtige Setztiefe, wenn der Ankerbolzen also korrekt positioniert ist, wird die Mutter wieder abgeschraubt und die Unterlegscheibe abgezogen. Dann kann das zu befestigende Bauteil, beispielsweise eine Platte, an dem Gewindeschaft des Ankerbolzens dadurch befestigt werden, dass es mit einem Loch auf den Schaft aufgeschoben wird. Anschließend wird wieder die Unterlegscheibe auf den Schaft aufgeschoben und die Mutter aufgeschraubt. Wenn die Mutter jetzt fest angezogen wird, wird der am Ende des Ankerbolzens angeordnete Spreizkörper gegenüber der Hülse bewegt und diese aufgeweitet. Dadurch wird der Ankerbolzen endgültig in dem Loch festgelegt.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: die Seitenansicht eines Bolzenankers nach der Erfindung;
- Fig. 2: den in einer Wand eingesetzten Bolzenanker vor dem Aufspreizen;
- Fig. 3: den Bolzenanker der Fig. 2 in aufgespreiztem Zustand;
- Fig. 4: eine der Fig. 1 entsprechende Darstellung einer weiteren Ausführungsform.

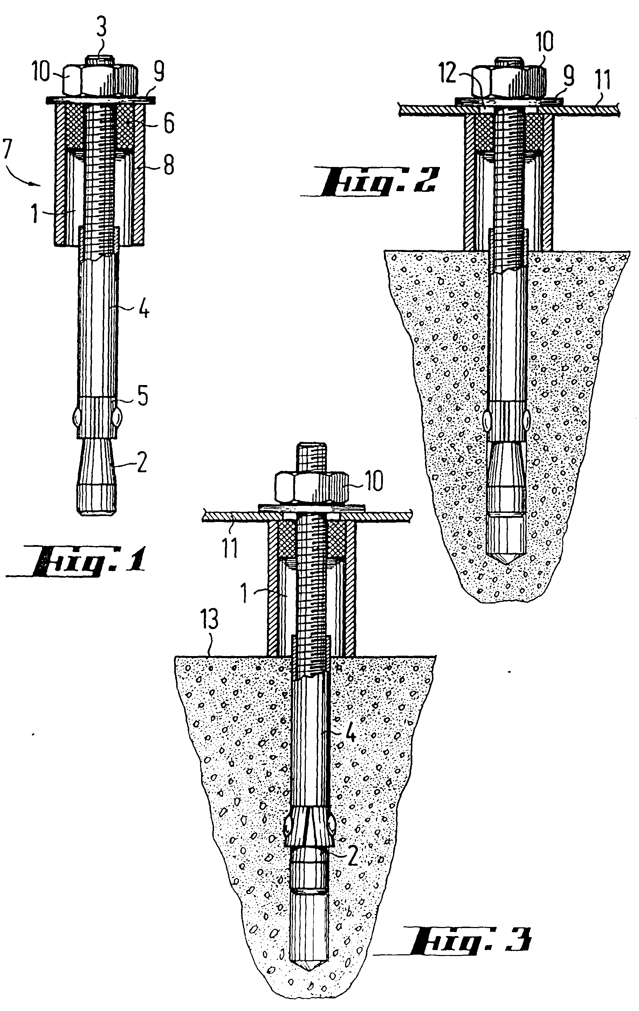

Fig. 1 zeigt eine Seitenansicht eines von der Erfindung vorgeschlagenen Bolzenankers in dem Zustand, in dem er von einem Monteur verwendet werden kann. Der Anker enthält einen Ankerbolzen 1, der die Länge des Ankers bestimmt. An seinem in Fig. 1 unteren Ende geht der Bolzen 1 in einen Aufspreizkörper 2 über, der die Form eines sich zum freien Ende hin erweiternden Kegels aufweist. Der Bolzen weist über etwa die Hälfte seiner Länge, ausgehend von dem dem Aufspreizkörper 2 abgewandten Ende 3, ein Außengewinde auf. Auf dem Bolzen ist eine Aufspreizhülse 4 angeordnet, die im Bereich ihres dem Aufspreizkörper 2 zugewandten Endes einen aufspreizbaren Bereich 5 enthält. Dieser aufspreizbare Bereich 5 ist derart konstruiert, dass dann, wenn der Aufspreizkörper 2 in die Hülse 4 hineingezogen wird, der aufweitbare Bereich 5 radial nach außen gedrückt wird.

An dem mit dem Gewinde versehenen Schaft des Ankerbolzens 1 ist mit Hilfe eines aus Elastomermaterial bestehenden Ringes 6 ein Abstandselement 7 festgelegt. Das Abstandselement 7 enthält eine metallische Hülse 8, an deren Innenseite im Bereich ihres nach außen gerichteten Endes der Ring 6 befestigt ist. Beispielsweise kann der Ring 6 an der Innenseite der metallischen Hülse 8 festgeklebt sein. Der Ring 6 weist eine Innenöffnung auf, deren Durchmesser etwas kleiner ist als der Außendurchmesser des Gewindes des Ankerbolzens 1. Dadurch wird die Hülse 8 an der Stelle des Ankerbolzens, an der sie gerade ist, festgehalten. Sie kann aber mit einem gewissen Kraftaufwand axial verschoben werden.

Bei entsprechender Dimensionierung ist es auch möglich, dass der Ring 6 weder mit dem Ankerbolzen noch mit der Hülse 8 verbunden ist, sondern sich zwischen beiden durch eine gewisse Kompression festhält.

Das Abstützelement 7 wird in eine Position gebracht, die das Auflegen einer Unterlegscheibe 9 und das Aufschrauben einer Mutter 10 ermöglicht. Die Mutter 10 wird gerade so weit aufgeschraubt, dass das freie Ende 3 des Schaftes noch herausragt. Die Reihenfolge des Anbringens ist insofern nicht kritisch, als die Hülse 8 auch von dem dem Aufspreizkörper 2 entsprechenden Ende aufgeschoben werden kann.

In der Anordnung, wie sie in Fig. 1 dargestellt ist, wird der Bolzenanker in ein vorher gebohrtes Loch in einer Wand eingeschlagen. Das Loch ist derart an den Bolzenanker angepasst, dass ein gewisser Widerstand zu überwinden ist. Der Bolzenanker lässt sich soweit einschlagen, bis das der Mutter 10 abgewandte Stirnende der Hülse 8 auf der Wandoberfläche zur Anlage kommt. In dieser Position verkeilt sich der Bolzenanker etwas in dem Loch, ohne allerdings schon wirklich festgelegt zu sein. Anschließend wird die Mutter 10 abgeschraubt und die Unterlegscheibe 9 entfernt. Auf den dann frei stehenden Gewindestift wird das zu befestigende Bauteil 11, beispielsweise eine Platte mit einem Loch 12, aufgeschoben. Danach wird die Unterlegscheibe 9 wieder aufgesetzt und die Mutter 10 aufgeschraubt. Dieser Zustand ist in Fig. 2 dargestellt. Nun kann der Bolzenanker in an sich bekannter Weise endgültig mit der Wand verkeilt werden, indem die Mutter 10 weiter aufgeschraubt wird. Dies führt dazu, dass der Ankerbolzen 1 mit dem Aufspreizkörper 2 nach vorne bzw. außen gezogen wird, während sich der aufspreizbare Bereich der Ankerhülse 4 in der Wand verkeilt. Selbst dann, wenn sich die Ankerhülse 4 etwas nach vorne bewegt, bleibt der Abstand zwischen der Oberfläche 13 der Wand und dem befestigten Bauteil 11 erhalten.

Die Abstandshülse 8 dient also nicht nur zur Gewährleistung des richtigen Abstands zwischen der Oberfläche 13 und dem Bauteil 11, sondern auch dazu, beim Einschlagen des Bolzenankers die richtige Setztiefe des Ankers zu gewährleisten. Es ist daher nicht erforderlich, das Bohrloch auf eine exakte Tiefe herzustellen.

In speziellen Fällen ist es auch denkbar, dass die Hülse 8 ohne einen Ring 6 zu ihrer Festlegung verwendet wird, beispielsweise dann, wenn die Befestigung an einer Decke erfolgen soll. Die Anbringung an dem Ankerbolzen hat jedoch den Vorteil, dass die Teile aneinander befestigt sind, so dass sich eine Montageerleichterung ergibt.

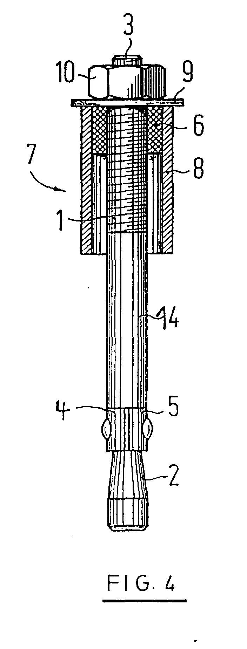

Während bei der in den Figuren 1 bis 3 dargestellten Ausführungsform eine Ankerhülse 4 vorhanden ist, die nur in ihrem Endbereich einen aufspreizbaren Bereich 5 aufweist, zeigt die Fig. 4 eine Ausführungsform, die etwas abgeändert ist. Der Ankerbolzen 1 weist im Anschluss an das Außengewinde einen Bereich 14 auf, in dem sein Außendurchmesser dem Außendurchmesser des Gewindes gleich ist. In diesem Bereich ist der Ankerbolzen ohne Gewinde ausgebildet. An dem in das Innere des Bohrlochs gerichteten Ende dieses Bereichs 14 ist eine Schulter gebildet, an die anschließend sich der Ankerbolzen in seinem Durchmesser verringert, um den kleineren Teil des Aufspreizkörpers 2 zu bilden. An dieser Schulter liegt die Ankerhülse 4 an, die in diesem Fall nur aus dem aufspreizbaren Bereich 5 in Form eines Spreizclips besteht.

Die Abstandshülse 8 kann nach der Erfindung mit einem Dämmschichtbildner beschichtet sein, der bei erhöhter Temperatur aufschäumt und die Hitze vom Untergrund abhält.

## Patentansprüche

1. Bolzenanker zur Abstandsmontage, mit
1.1 einer Ankerhülse (4), die
1.1.1 über mindestens einen Teil ihrer Länge zur Verankerung in einem Loch aufweitbar ist,
1.2 einem Ankerbolzen (1), der
1.2.1 einen Aufspreizkörper (2) und
1.2.2 einen mit einem Gewinde versehenen Schaft aufweist, sowie mit
1.3 einem Abstandselement (7), das
1.3.1 den Ankerbolzen (1) und/oder die Ankerhülse (4) umgibt.

2. Bolzenanker nach Anspruch 1, bei dem das Abstandselement (7) an dem Ankerbolzen (1) und/oder der Ankerhülse (4) festgelegt ist, insbesondere durch Reibschluss zwischen dem Abstandselement (7) und dem Gewinde des Ankerbolzens (1).

3. Bolzenanker nach Anspruch 1 oder 2, bei dem das Abstandselement (7) eine Abstandshülse (8) aufweist, die den Ankerbolzen (1) mit Abstand umgibt.

4. Bolzenanker nach einem der Ansprüche 2 oder 3, bei dem die Festlegung durch mindestens ein Federelement erfolgt.

5. Bolzenanker nach einem der vorhergehenden Ansprüche, bei dem zwischen dem Abstandselement (7) und dem Ankerbolzen (1) ein Ring (6) aus gummielastischem Material angeordnet ist.

6. Bolzenanker nach Anspruch 5, bei dem der Ring (6) an dem Abstandselement (7) und/oder dem Ankerbolzen (1) durch seine eigene Verformung festgeklemmt ist.

7. Verfahren zur Befestigung eines Bauteils mit Abstand vor einem anderen Bauteil, insbesondere einer Wand, bei dem
7.1 ein Loch in dem anderen Bauteil hergestellt wird,
7.2 auf den Ankerbolzen (1) eines Bolzenankers ein Abstandselement (7) aufgeschoben wird,
7.3 auf das freie Ende des Ankerbolzens (1) eine das Entfernen des Abstandselements (7) nach vorne verhindernde Mutter (10) aufgeschraubt wird, und
7.4 der Bolzenanker in das Loch eingeschlagen wird.

8. Verfahren nach Anspruch 7, bei dem der Bölzenanker so weit eingeschlagen wird, bis der Abstand zwischen der Oberfläche (13) der Wand und der Mutter (10) etwa der Länge des Abstandselementes (7) entspricht.

9. Verfahren nach Anspruch 7 oder 8, bei dem der Bolzenanker so weit eingeschlagen wird, bis das Abstandselement (7) an der Oberfläche (13) der Wand anschlägt.

10. Verfahren nach einem der Ansprüche 7 bis 9, bei dem der Abstandshalter (7) vor dem Einschlagen des Bolzenankers an diesem festgelegt wird, insbesondere reibschlüssig.

11. Verfahren nach einem der Ansprüche 7 bis 10, bei dem zwischen dem Abstandselement (7) und der Mutter (10) eine Unterlegscheibe (9) angeordnet wird.

12. Verfahren nach einem der Ansprüche 7 bis 11, bei dem nach dem Einschlagen des Bolzenankers die Mutter (10) abgeschraubt, ggf. die Unterlegscheibe (9) abgenommen, das zu befestigende Bauteil auf den Ankerbolzen aufgeschoben und anschließend die Mutter (10) wieder aufgeschraubt wird.

13. Verfahren nach einem der Ansprüche 7 bis 12, bei dem der Bolzenanker nach dem Befestigen des Bauteils an ihm endgültig verankert wird.
